# EUROPEAN PATENT APPLICATION

(11) **EP 4 187 452 A1**
(43) Date of publication of application: **31.05.2023**
(21) Application number: 22188065.1
(22) Date of filing: 01.08.2022
(51) Int. Cl.: G06N 20/00

(54) **MACHINE LEARNING BASED ENTITY RECOGNITION**

(30) Priority: 01.08.2021 IN 202111034613
(71) Applicant: UiPath, Inc., New York, NY 10016 (US)
(72) Inventor: IYER, Radhakrishnan, Bengaluru, 560102, Karnataka (IN); GANESAN, Eshwar, Bengaluru, Karnataka 560037 (IN); KUMAR, Naveen M., Bengaluru 560066 Karnataka (IN)
(74) Representative: Fresh IP

(57) **Abstract**

Disclosed herein is a system. The system includes a memory and a processor. The memory stores processor executable instructions for a recognition engine. The processor is coupled to the memory. The processor executes the processor executable to cause the system to define a plurality of baseline entities to be identified from documents in a workflow and digitize the one or documents to generate corresponding document object models. The recognition engine further causes the system to train a model by using as inputs the corresponding document object models and tagged files and determine, using the model, plurality of target entities from target documents.

## Description

### BACKGROUND

The disclosure herein relates to the field of robotic process automation (RPA), and particularly to machine learning (ML) based entity recognition with respect to RPAs.

Generally, documents can be structure in a number of ways. For example, a document for an insurance claim process can include a field layout (with fields placed variously in the document that can be extracted), content and detail structure, keyword variations (i.e., from insurer to insurer), etc. Conventional pre-defined extractors fail to accurately and correctly evaluate documents consistently because of the high variation of documents and the layouts, the structures, the variations, etc. therein (e.g., the number of ways documents are structured). Hence, at present, a person manually evaluates the documents, the layouts, structures, the variations etc. to determine logical meaning and extract relevant fields. Manually evaluation (and validation) of documents is time consuming and error prone, both of which can delay further document processing. There is a need to improve document processing by decreasing turnaround times, as well as have optimum efficiency.

### SUMMARY

According to one or more embodiments, a system includes a memory and at least one processor. The memory stores processor executable instructions for a recognition engine. The at least one processor is coupled to the memory and executes the processor executable to cause the system to define a plurality of baseline entities to be identified from one or more documents in a workflow and digitize the one or more documents to generate one or more corresponding document object models. The recognition engine further causes the system to train a model by using as inputs the one or more corresponding document object models and tagged files and determine, using the model, a plurality of target entities from one or more target documents.

According to one or more embodiments, the computing system embodiment above can be implemented as a method, an apparatus, a device, and/or a computer program product.

### BRIEF DESCRIPTION OF THE DRAWING(S)

A more detailed understanding may be had from the following description, given by way of example in conjunction with the accompanying drawings, wherein like reference numerals in the figures indicate like elements, and wherein:
FIG. 1 depicts an environment illustrating development, design, operation, and/or execution of robotic process automations (RPAs) according to one or more embodiments;
FIG. 2 is an illustration of a computing system according to one or more embodiments;
FIG. 3 is a block diagram illustrating a method executed by one or more processors according to one or more embodiments;
FIG. 4 is an example user interface according to one or more embodiments;
FIG. 5 is an example user interface according to one or more embodiments;
FIG. 6 is an example user interface according to one or more embodiments; and
FIG. 7 is an example user interface according to one or more embodiments.

### DETAILED DESCRIPTION

Disclosed herein is a ML based entity recognition and RPA engine ("recognition engine"). The recognition engine includes software and/or hardware for document processing. More particularly, the recognition engine includes software and/or hardware for robust and efficient custom named entity recognition for documents, as well as displaying predicted entities thereof. The recognition engine can be implemented in a computing system through a combination of hardware and software (e.g., processor executable code that is necessarily rooted in the hardware).

One or more technical effects, advantages, and benefits of the recognition engine include improving document processing by increasing accuracy and decreasing turnaround times, as well as providing optimum efficiency.

In contrast to the recognition engine described herein, conventional document processing, such as the pre-defined extractors noted herein, are trained on specific datasets to extract a minimal number (e.g., eighteen predefined fields) of different fields from a document. These datasets are unable to accommodate feedback, whether through ML and/or user input. Further, conventional document processing only works when these different fields are clearly defined within documents. For example, conventional document processing would not be able to distinguish two "Money" entries containing "$30 million" and "$30m." Further, even if "$30 million" is correctly identified as a "Money" field and extracted from a document, "$30m" may be incorrectly extracted or misclassified as another field.

As an example of a pre-defined extractor of conventional document processing, regular based expression extractors include an increased chance of false positive increases. In this regard, if a policy number is defined with a regular expression criteria, a chance that a number in a footer of a document satisfies the regular expression criteria and would be extracted. Clearly, this would result several incorrect data being extracted and add to any manual efforts needed to clear out the incorrect data.

As another example of a pre-defined extractor of conventional document processing, keyword based extractors are supposed to work when fields definitions remain the same throughout different documents. Yet, based on practical experience, this is never the case. Further, keyword based extractors also fail when a number of variations for a keyword exist.

As another example of a pre-defined extractor of conventional document processing, position based extractors generally work if field positions remain constant for across all documents. However, in semi-structured and unstructured documents, field positions never remain constant. So, when field positions vary, the position based extractor becomes less optimal or sometimes unusable.

Thus, conventional document processing, such as the pre-defined extractors noted herein, does not enable training on a workflow due to document format, false positive extractions, keyword variations, varying field positions, etc.

According to one or more embodiments, the recognition engine overcomes the deficiencies of conventional document processing and provides increased accuracy, decreased turnaround times, and optimum efficiency by providing a custom and dynamic name entity recognition (NER) framework where robotic process automations and/or users tag entities of fields before training a model. For instance, the recognition engine implements the custom and dynamic NER framework on feature enhanced algorithm (e.g., such as a conditional random fields (CRFs) algorithm with custom features) to identify and extract fields or entities of interest. In this way, the recognition engine defines fields or entities to be identified from a document in a workflow and digitizes documents to get a document object model (DOM). Further, the recognition engine can utilize RPAs to mark and/or receive user inputs that manually mark each field or entity of interest, such as in a validation station of the recognition engine to obtain tagged files. The DOM and tagged files (e.g., obtained as an output from validation station) are fed to a model of the recognition engine using the feature enhanced algorithm for training. Features from words, characters, etc. across the documents are extracted to train the model and later deployed into an artificial intelligence (AI) center of the recognition engine. Subsequently, at runtime, the recognition engine determines (e.g., predicts and/or extracts) fields from a target document using ML/AI services and activities. With respect to predicted fields of the target document, the recognition engine can determine a confidence metric that can enable automatic review of the predicted fields in the validation station by an RPA or a user (e.g., if a field is missing the confidence metric may be 0, while the confidence metric can be a value between 0 and 1 if the predicted field does not match correctly match). All feedback with respect to the validation station can be saved and used later as a part of feedback loop to retrain the model of the recognition engine. Thus, the recognition engine involves a multi-step data manipulation of documents, entities, and data to provide the one or more technical effects, advantages, and benefits of the reducing cost, increasing time effectiveness, providing dynamic customization, and enabling large scope applicability that are otherwise not available with conventional document processing.

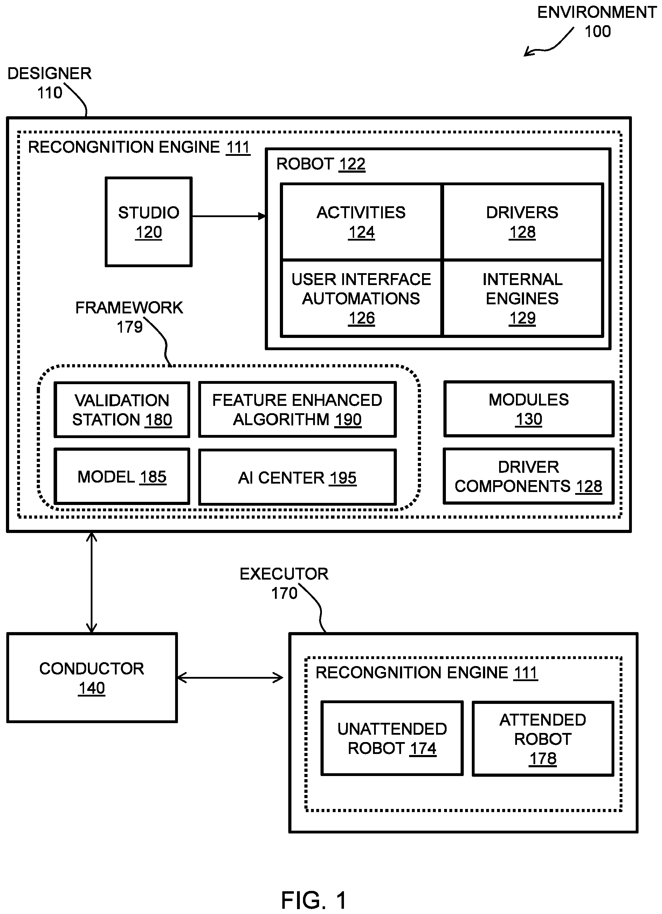

FIG. 1 depicts an environment 100 illustrating development, design, operation, and/or execution of robotic process automations (RPAs) according to one or more embodiments. The environment 100 can be a design and deployment computing platform that includes one or more components. Note that while a single block is shown for each of the one or more components of the environment 100, that single block is representative of one or more of that component.

As shown, the environment 100 can include a designer 110 that further includes a ML based entity recognition and RPA engine ("recognition engine") 111. The recognition engine 111 can include a studio component or module ("studio") 120 that produces one or more robots (e.g., a robot 122) that perform one or more activities 124 and/or provide one or more user interface (UI) automations 126 using one or more driver components 128 and/or internal engines 129. The robot 122 may also engage with other driver components 131 and modules 132 within the designer 110 as well. Further, the environment 100 can include a conductor 140 and an executor 170, which can download/acquire/transmit the recognition engine 111 and/or the robot 122 so that one or both can be provided in the environment 100, such as an unattended robot 174, an attended robot 178, and a separate instance of the recognition engine 111 of the executor 170 as shown.

The designer 110, the conductor 140, and the executor 170 are representative of computing devices, computing apparatuses, and/or computing systems, which comprise hardware, software, or a combination thereof. The designer 110, the conductor 140, and the executor 170, and any software thereon (e.g., the recognition engine 111) are configured to interact with a user or an operator so as to receive inputs and provide outputs. In an example, the executor 170 can be or implement mobile computing and/or mobile device environments.

According to one or more embodiments, the designer 110 can be referred to as a studio platform, a development platform, and/or an online platform. The designer 110 can include one or more engines (e.g., the recognition engine 111), development environments (e.g., the studio 120), sub-programs (e.g., a validation station 180 and/or a model 185 as described herein), or the like and can be configured to generate code, instructions, commands, or the like for a robot (e.g., the one or more robots 122, the unattended robots 174, and the attended robots 178) to perform or automate document processing (e.g., the one or more activities 124 and/or provide the one or more UI automations 126).

The recognition engine 111, generally, is software and/or hardware that implements robotic process automation. In this regard, the recognition engine 111 is detailed as a dotted box to illustrate a scalability and a portability of the recognition engine 111 within the environment 100. Further, in accordance with one or more embodiments, the recognition engine 111 can provide or be part of a framework/mechanism (e.g., the environment 100) that automatically implements codes and designs the robot 122 within the studio 120, such as a custom and dynamic NER framework 179. As shown in FIG. 1, the custom and dynamic NER framework 179 can include and/or be integrated with the validation station 180, the model 185, a feature enhanced algorithm 190, and an AI center 195.

The validation station 180 can be a GUI sub-program for users and/or RPAs to review and/or validate entity matches, feature extractions, etc. For example, the validation station 180 can provides one or more sub-software modules (e.g., an intelligent document activities sub-software modules and a data labelling sub-software modules) that further integrate with the AI center 195 for entity marking. For instance, the intelligent document activities and the data labelling sub-software modules can be part of the validation station 180 that digitize documents, classify documents, validate automatic classifications, train classifiers, extract data from documents, validate automatic data extraction results, train extractors, export, extracted information, etc.

The model 185 can be a machine learning sub-program that expresses/derives meaning of entities to find relationships therebetween via conceptual, data, logical, and/or physical modelling.

The feature enhanced algorithm 190 can be a statistical mathematical model that embodies a set of statistical assumptions concerning a generation of features from the documents. The features can be customizable so the recognition engine 111 can identify and extract the entities, e.g., made available within the studio 120. An example of the feature enhanced algorithm 190 includes a CRFs algorithm with custom features applied for contextual machine learning and used for structured predictions. The custom and dynamic NER framework can also enable robotic process automations and/or users tag entities of fields before training the model 185.

The AI center 195 can be a AI sub-program that extracts and/or predicts entities and relationships based on at least the model 185 and features generated therefrom.

The recognition engine 111 can also enable developers and/or orchestrators (e.g., a user or operator) to code, program, and/or design the robot 122, such as through the studio 120. In an embodiment, the studio 120 can provide application integration, along with automating of third-party applications, administrative information technology (IT) tasks, and/or business IT processes. Generally, the recognition engine 111 can include robot intelligence that looks at a known set captured images (e.g., little pictures) against presently captured images, aligns sequences, determines if there is a match thereto, and supports presents the matches. Similarly, the recognition engine 111 can include robot intelligence that defines entities to be identified from a document in a workflow, digitizes documents, marks and/or receives marks (from the validation station 180), and feeds the model 185 using the feature enhanced algorithm 190.

The robot 122 (and the unattended robots 174 and the attended robots 178) may be an application, applet, script, or the like that may perform and/or automate one or more workflows (e.g., represented in part by the one or more activities 124 and/or provide the one or more UI automations 126). A workflow (e.g., an RPA workflow) may include, but are not limited to, task sequences, flowcharts, Finite State Machines (FSMs), global exception handlers, UI transparents, or the like. Task sequences may be linear processes for handling linear tasks between one or more applications or windows. Flowcharts may be configured to handle complex business logic, enabling integration of decisions and connection of activities in a more diverse manner through multiple branching logic operators. FSMs may be configured for large workflows. FSMs may use a finite number of states in their execution, which may be triggered by a condition, transition, activity, or the like. Global exception handlers may be configured to determine workflow behavior when encountering an execution error, for debugging processes, or the like. UI transparents can be software operations to an underlying operating system (OS) or hardware. Non-limiting examples of operations that can be accomplished by one or more workflows may be one or more of performing log-ins, filling a form, information technology (IT) management, or the like. To run a workflow for UI automation and/or document processing, the robot 122 may need to uniquely identify specific screen elements, such as buttons, checkboxes, text fields, labels, etc., regardless of application access or application development. Examples of application access may be local, virtual, remote, cloud, Citrix^{®}, VMWare^{®}, VNC^{®}, Windows^{®} remote desktop, virtual desktop infrastructure (VDI), or the like. Examples of application development may be win32, Java, Flash, hypertext markup language (HTML), HTML5, extensible markup language (XML), JavaScript, C#, C++, Silverlight, or the like.

According to one or more embodiments, at development, the robot 122 can be produced at/by the designer 110 (e.g., the studio 120). Further, at deployment, the robot 122 may be managed, controlled, configured or the like at/by the conductor 140 (e.g., within the recognition engine 111). At deployment, the robot 122 may also be executed within the executor 170. In an example, a user input (e.g., a selection on a display) can be submitted by a user or an operator to the designer 110. From the selection, which the designer 110 may provide to the robot 122, the robot 122 may determine representative data of area(s) of a visual display (e.g., selected by the user or the operator). As part of RPAs, shapes (e.g., squares, rectangles, circles, polygons, freeform, or the like) in multiple dimensions may be utilized for UI robot development and runtime in relation to a computer vision (CV) operation and/or the model 185.

According to one or more embodiments, UI automations 126 may be performed by the robot 122 using the drivers 128 therein, and the recognition engine 111 can perform activities using the modules 130 (e.g., CV activities module or engine). The driver components 132 may be utilized for UI automation by the robot 122 to get elements of a UI. Similarly, the driver components 132 may be utilized for document processing by the robot 122 to get, determine, and/or predict entities of a document. The driver components 132 may include, but are not limited to, OS drivers, browser drivers, virtual machine drivers, enterprise drivers, and the like. In certain configurations, the modules 130 may be a driver used for document processing. Further, any of these actions by the robot 122 can be implemented on a client, such as via the unattended robot 174, the attended robot 178, and/or the separate instance of the recognition engine 111 of the executor 170.

The conductor 140 can command or instruct the robots 122, 174, and 178 or the executor 170 to execute or monitor a workflow in a mainframe, web, virtual machine, remote machine, virtual desktop, enterprise platform, online platform, desktop app(s), browser, or the like client, application, or program. The conductor 140 may act as a central or semi-central point to instruct or command one or more robots (e.g., the robots 122, 174, and 178) to automate a computing platform (e.g., the environment 100).

In accordance with one or more embodiments, the conductor 140 may be configured for provisioning, deployment, configuration, queueing, monitoring, logging, and/or providing interconnectivity. Provisioning may include creating and maintenance of connections or communication between the one or more robots, the executor 170, and conductor 140. Deployment may include assuring the delivery of package versions to assigned robots for execution. Configuration may include maintenance and delivery of robot environments and process configurations. Queueing may include providing management of queues and queue items. Monitoring may include keeping track of robot identification data and maintaining user permissions. Logging may include storing and indexing logs to a database (e.g., an SQL database) and/or another storage mechanism (e.g., ElasticSearch^{®}, which provides the ability to store and quickly query large datasets). The conductor 140 may provide interconnectivity by acting as the centralized point of communication for third-party solutions and/or applications.

According to one or more embodiments, the one or more robots and the executor 170 may be configured as the unattended robot 174 and/or the attended robot 178. For unattended operations, automation by the unattended robot 174 may be performed without third party inputs or control. For attended operations, automation by the attended robot 178 may be performed by receiving input, commands, instructions, guidance, or the like from a third party component. The unattended robot 174 and/or the attended robot 178 may run or execute on mobile computing or mobile device environments.

According to one or more embodiments, the one or more robots and the executor 170 may be configured as execution agents that run workflows built in the designer 110. A commercial example of a robot(s) for UI or software automation is UiPath Robots^{™}. In some embodiments, the one or more robots and the executor 170 may install the Microsoft Windows^{®} Service Control Manager (SCM)-managed service by default. As a result, such robots can open interactive Windows^{®} sessions under the local system account, and have the rights of a Windows^{®} service.

According to one or more embodiments, the one or more robots, the validation station 180, and the executor 170 may be installed in a user mode. For example, the one or more robots may have the same rights as a user under which a given robot is installed. This feature may also be available for High Density (HD) robots, which ensure full utilization of each machine at maximum performance such as in an HD environment.

According to one or more embodiments, the one or more robots and the executor 170 may be split, distributed, or the like into several components, each being dedicated to a particular automation task or activity. Robot components may include SCM-managed robot services, user mode robot services, executors, agents, command line, or the like. SCM-managed robot services may manage or monitor Windows^{®} sessions and act as a proxy between the conductor 140 and execution hosts (i.e., the computing systems on which the one or more robots are executed). These services may be trusted with and manage the credentials for the one or more robots and the executor 170. User mode robot services may manage and monitor Windows^{®} sessions and act as a proxy between conductor 140 and the execution hosts. User mode robot services may be trusted with and manage the credentials for robots. A Windows^{®} application may automatically be launched if the SCM-managed robot service is not installed. In an example, the executor 170 may run given jobs under a Windows^{®} session (e.g., they may execute workflows described herein) and may be aware of per-monitor dots per inch (DPI) settings. Agents may be Windows^{®} Presentation Foundation (WPF) applications that display available jobs in a system tray window. Agents may be a client of the service. Agents may request to start or stop jobs and change settings. The command line may be a client of the service. The command line is a console application that can request to start jobs and waits for their output.

According to one or more embodiments, configurations where components of the one or more robots and/or the executor 170 are split helps developers, support users, and computing systems more easily run, identify, and track execution by each component. Special behaviors may be configured per component this way, such as setting up different firewall rules for the executor 170 and a service. The executor 170 may be aware of DPI settings per monitor in some embodiments. As a result, workflows may be executed at any DPI, regardless of the configuration of the computing system on which they were created. Projects from the designer 110 may also be independent of browser zoom level. For applications that are DPI-unaware or intentionally marked as unaware, DPI may be disabled in some embodiments.

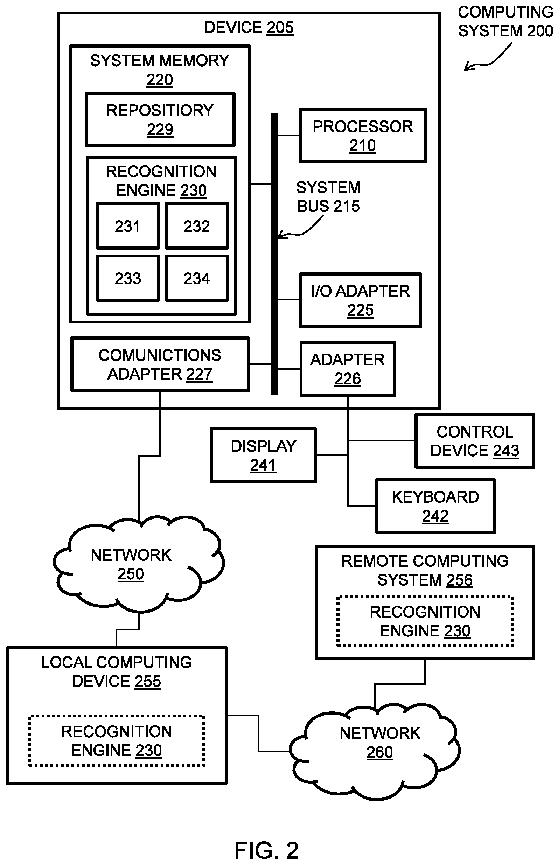

Turning now to FIG. 2, a computing system 200 is illustrated according to one or more embodiments. The computing system 200 can be representative of any computing device, computing apparatus, and/or computing environment, which comprise hardware, software, or a combination thereof (e.g., hardware supporting the recognition engines 111, the designer 110, the conductor 140, and the executor 170 of FIG. 1). Further, embodiments of the computing system 200 disclosed may include apparatuses, systems, methods, and/or computer program products at any possible technical detail level of integration.

The computing system 200 has a device 205 (e.g., the designer 110, the conductor 140, and the executor 170 of FIG. 1) with one or more central processing units (CPU(s)), which are collectively or generically referred to as a processor 210. The processor 210, also referred to as processing circuits, is coupled via a system bus 215 to a system memory 220 and various other components. The computing system 200 and/or the device 205 may be adapted or configured to perform as an online platform, a server, an embedded computing system, a personal computer, a console, a personal digital assistant (PDA), a cell phone, a tablet computing device, a quantum computing device, cloud computing device, a mobile device, a smartphone, a fixed mobile device, a smart display, a wearable computer, or the like.

The processor 210 may be any type of general or specific purpose processor, including a central processing unit (CPU), application specific integrated circuit (ASIC), field programmable gate array (FPGA), graphics processing unit (GPU), controller, multi-core processing unit, three dimensional processor, quantum computing device, or any combination thereof. The processor 210 may also have multiple processing cores, and at least some of the cores may be configured to perform specific functions. Multi-parallel processing may also be configured. In addition, at least the processor 210 may be a neuromorphic circuit that includes processing elements that mimic biological neurons. The processor 210 can also be representative of cloud processing across the computing system 200.

The bus 215 (or other communication mechanism) is configured for communicating information or data to the processor 210, the system memory 220, and various other components, such as the adapters 225, 226, and 227.

The system memory 220 is an example of a (non-transitory) computer readable storage medium, where a repository 229 can be located/managed and/or software (e.g., a recognition engine 230) can be stored. The repository 229 can database (e.g., an SQL database) and/or another storage mechanism. According to one or more embodiments, the repository 229 can include automations and other data as described herein (e.g., documents, entities, confidence metrics, images, segments, hashes, video, frames, source data, robot video, source code, etc.) for access by the recognition engine 230. For example, a model (e.g., the model 185 of FIG. 1) can be built and stored in the repository 229 during a training phase of the recognition engine 230. In this regard, the repository 229 stores, as training data of the model, custom features to identify and extract fields or entities of interest.

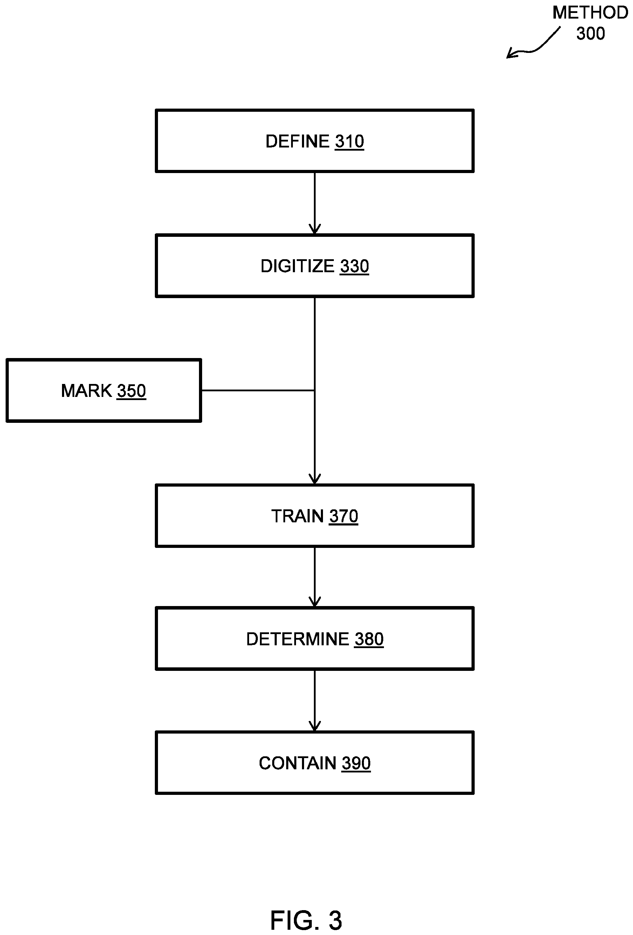

The recognition engine 230 can be stored as software components, modules, engines, instructions, or the like for execution by the processor 210 to cause the device 205 to operate, such as described herein with reference to FIGS. 3-7. For example, the recognition engine 230 define a plurality of baseline entities to be identified from one or more documents in a workflow, digitize the one or more documents to generate one or more corresponding DOMs, train a model (e.g., stored in the repository 229) by using as inputs the one or more corresponding DOMs and tagged files (e.g., tagged JavaScript object notation (JSON) files), and determine a plurality of target entities from one or more target documents. Note that feature generation by the model to determine the plurality of target entities is a technical effect and benefit of the recognition engine 230 not present in conventional keyword-based, position-based, and/or regex-based extractors.

The system memory 220 can include any combination of a read only memory (ROM), a random access memory (RAM), internal or external Flash memory, embedded static-RAM (SRAM), solid-state memory, cache, static storage such as a magnetic or optical disk, or any other types of volatile or non-volatile memory. Non-transitory computer readable storage mediums may be any media that can be accessed by the processor 210 and may include volatile media, non-volatile media, or the like. For example, the ROM is coupled to the system bus 215 and may include a basic input/output system (BIOS), which controls certain basic functions of the device 205, and the RAM is read-write memory coupled to the system bus 215 for use by the processors 210. Non-transitory computer readable storage mediums can include any media that is removable, non-removable, or the like.

In connection with FIG. 1, the recognition engine 230 of FIG. 2 can be representative of recognition engine 111 and components therein, such that the memory 220 and the processor 210 can logically design/configure/provide the robot 122, which further performs one or more activities 124 and/or provides one or more user interface (UI) automations 126 using one or more driver components 128 and/or internal engines 129. The recognition engine 230 of FIG. 2 can also be representative of an operating system for the device 205 for the computing system 200.

According to one or more embodiments, the recognition engine 230 can be configured in hardware, software, or a hybrid implementation. The recognition engine 230 can be composed of modules that are in operative communication with one another, and to pass information or instructions. According to one or more embodiments, the recognition engine 230 can provide one or more user interfaces, such as on behalf of the operating system or other application and/or directly as needed to provide the intelligent automation experience. The user interfaces include, but are not limited to, internet browsers, graphic user interfaces, window interfaces, and/or other visual interfaces for applications, operating systems, file folders, and the like. Thus, user activity can include any interaction or manipulation of the user interfaces provided by the recognition engine 230.

The recognition engine 230 can further include custom modules to perform application specific processes or derivatives thereof, such that the computing system 200 may include additional functionality. For example, according to one or more embodiments, the recognition engine 230 may be configured to store information, instructions, commands, or data to be executed or processed by the processor 210 to enable operations 231, 232, 233, and 234. For instance, the recognition engine 230 can provide a specific configuring and tooling robotic document processing method to the computing system 200, so that the computing system 200 can define (231) a plurality of baseline entities to be identified from one or more documents in a workflow, digitize (232) the one or more documents to generate one or more corresponding DOMs, and train (233) a model by using as inputs the one or more corresponding DOMs and tagged files (e.g., tagged JSON files), along with any other operations/actions (234) described herein. Other operations/actions can include, but are not limited to, implementing a feature enhanced algorithm, receiving markings of entities of interest, containing misclassification and mis-splitting, etc. For example, one or more robotic process automations of the recognition engine 230 can particularly define (231) the plurality of baseline entities, digitize (232) the one or more documents, train (233) the model, determine (234) the plurality of target entities, or otherwise operate (234) as described herein.

Further, modules of the recognition engine 230 can be implemented as a hardware circuit comprising custom very large scale integration (VLSI) circuits or gate arrays, off-the-shelf semiconductors such as logic chips, transistors, or other discrete components, in programmable hardware devices (e.g., field programmable gate arrays, programmable array logic, programmable logic devices), graphics processing units, or the like. Modules of the recognition engine 230 can be at least partially implemented in software for execution by various types of processors. According to one or more embodiments, an identified unit of executable code may include one or more physical or logical blocks of computer instructions that may, for instance, be organized as an object, procedure, routine, subroutine, or function. Executables of an identified module co-located or stored in different locations such that, when joined logically together, comprise the module. A module of executable code may be a single instruction, one or more data structures, one or more data sets, a plurality of instructions, or the like distributed over several different code segments, among different programs, across several memory devices, or the like. Operational or functional data may be identified and illustrated herein within modules of the recognition engine 230, and may be embodied in a suitable form and organized within any suitable type of data structure.

With respect to the adapters 225, 226, and 227 of FIG. 2, the device 205 can particularly include an input/output (I/O) adapter 225, a device adapter 226, and a communications adapter 227. According to one or more embodiments, the I/O adapter 225 can be configured as a small computer system interface (SCSI), of in view of frequency division multiple access (FDMA) single carrier FDMA (SC-FDMA), time division multiple access (TDMA), code division multiple access (CDMA), orthogonal frequency-division multiplexing (OFDM), orthogonal frequency-division multiple access (OFDMA), global system for mobile (GSM) communications, general packet radio service (GPRS), universal mobile telecommunications system (UMTS), cdma2000, wideband CDMA (W-CDMA), high-speed downlink packet access (HSDPA), high-speed uplink packet access (HSUPA), high-speed packet access (HSPA), long term evolution (LTE), LTE Advanced (LTE-A), 802.11x, Wi-Fi, Zigbee, Ultra-WideBand (UWB), 802.16x, 802.15, home Node-B (HnB), Bluetooth, radio frequency identification (RFID), infrared data association (IrDA), near-field communications (NFC), fifth generation (5G), new radio (NR), or any other wireless or wired device/transceiver for communication. The device adapter 226 interconnects input/output devices to the system bus 215, such as a display 241, a keyboard 242, a control device 243, or the like (e.g., a camera, a speaker, etc.).

The communications adapter 226 interconnects the system bus 215 with a network 250, which may be an outside network, enabling the device 205 to communicate data with other such devices (e.g., such as the local computing device 255 and, further, the remote computing system 256 through the network 260). In one embodiment, the adapters 225, 226, and 227 may be connected to one or more I/O buses that are connected to the system bus 215 via an intermediate bus bridge. Suitable I/O buses for connecting peripheral devices such as hard disk controllers, network adapters, and graphics adapters typically include common protocols, such as the Peripheral Component Interconnect (PCI).

The display 241 is configured to provide one or more UIs or graphic UIs (GUIs) that can be captured by and analyzes by the recognition engine 230, as the users interacts with the device 205. Examples of the display 241 can include, but are not limited to, a plasma, a liquid crystal display (LCD), a light emitting diode (LED), a field emission display (FED), an organic light emitting diode (OLED) display, a flexible OLED display, a flexible substrate display, a projection display, a 4K display, a high definition (HD) display, a Retina^{©} display, an in-plane switching (IPS) display or the like. The display 241 may be configured as a touch, three dimensional (3D) touch, multi-input touch, or multi-touch display using resistive, capacitive, surface-acoustic wave (SAW) capacitive, infrared, optical imaging, dispersive signal technology, acoustic pulse recognition, frustrated total internal reflection, or the like as understood by one of ordinary skill in the art for input/output (I/O).

The keyboard 242 and the control device 243, such as a computer mouse, a touchpad, a touch screen, a keypad, or the like, may be further coupled to the system bus 215 for input to the device 205. In addition, one or more inputs may be provided to the computing system 200 remotely via another computing system (e.g., the local computing device 255 and/or the remote computing system 256) in communication therewith, or the device 205 may operate autonomously.

According to one or more embodiments, the functionality of the device 205 with respect to the recognition engine 230 can also be implemented on the local computing device 255 and/or the remote computing system 256, as represented by separate instances of the recognition engine 230. Note that the one or more documents can be stored in a common repository (e.g., the repository 229) located at the device 205, the local computing device 255, and/or the remote computing system 256 and can be downloaded (on demand) to and/or from each of the device 205, the local computing device 255, and/or the remote computing system 256.

Turning now to FIG. 3, a block diagram illustrating a method 300 executed by one or more processors according to one or more embodiments. More particularly, the method 300 is an example implementation of the recognition engine described herein (e.g., the recognition engine 111 of FIG. 1 and/or the recognition engine 230 of FIG. 2) to provide a specific configuring and tooling robotic document processing method with respect to the intelligent automation experience.

The process flow 300 begins at block 310, where the recognition engine defines entities to be identified (e.g., a plurality of baseline entities) from a document in a RPA workflow. Entities can be any field, instance variable, data member, member variable, or the like that can contain a sequence of characters of fixed or varying length. Examples of entities can include, but are not limited to, name, date, amount, age, address, account number, gender, and hair color. The document, generally, is any computer created file (e.g., XML or HTML file) that contains entities, text, images, audio, video, etc. The RPA workflow can include a sequence of tasks perform by a RPA with respect to document processing.

According to one or more embodiments, the recognition engine builds the RPA workflow via a taxonomy manager to define entities (e.g., to be identified from the document). The taxonomy manager controls a taxonomy (i.e., system of classification) for the entities. The taxonomy manager can add categories to any part of a private or self-classification tree and seamlessly create rules that map entities into categories of the private or self-classification tree.

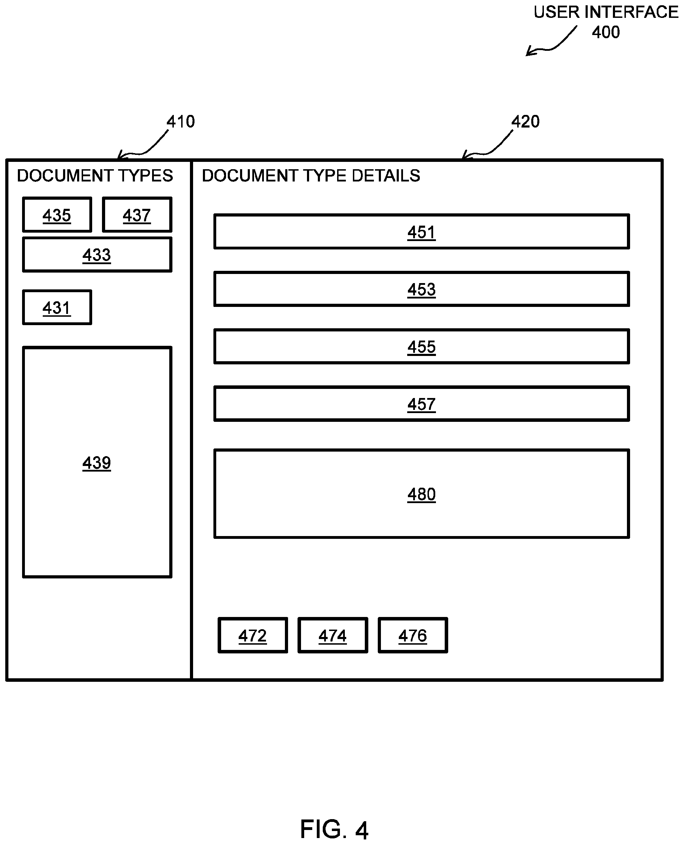

Turning to FIG. 4, an example user interface 400 is shown according to one or more embodiments. The user interface 400 is an example of a taxonomy manager GUI to build the RPA workflow. The user interface 400 includes 'document types' window 410 and 'document type details' window 420. Operations of the window 410 include add 431 a new document type, search 433 a document type, filter 435 by group, and filter 437 by category. Further, in the window 410, search results 439 can be clickable. Manipulation and selection of a document type in the window 410 enables editing the details of that document type in the window 420. For instance, for a selected document type, operations of the window 420 include define 451 a name (e.g., entities), define 453 a group (e.g., email extraction), define 455 a category (e.g., signature), define 457 a document type code (this can be an optional value), add 472 a new field, save 474, and cancel 476. A field list 480 of the window 420 can display all the fields created for the document type. For instance, the filed list 480 can show agency name, address line 1, address line 2, city, state/county/province, zip postal code, agency phone number, etc.

For instance, document tagging via the user interface 400 includes defining the document group (453), document category (455), and document type (457) initially. Then, by selecting to add new fields (472), entities of interest can be tagged/marked. Once all the fields/entities are defined, the document type details (e.g., the taxonomy) can be saved 474 and the method can proceed to block 330. Note that documents that have been tagged, as well as the plurality of baseline entities defined therein, can be saved 474 to a tagging folder of a repository (e.g., the repository 229 of FIG. 2).

At block 330, the recognition engine digitizes documents. According to one or more embodiments, digitizing documents generates corresponding DOMs and/or document texts (e.g., machine-encoded text or text data). A DOMs can be is a cross-platform and language-independent interface that a document as a tree structure with each node being object that represent a document part. Note that, after the taxonomy is defined (at block 310), documents from a tagging folder can be selected via an user interface and sent (to the recognition engine) for digitization. Further, the DOMs and/or document texts can be presented to a validation station (e.g., the validation station 180 of FIG. 1) as described with respect to block 350 (for a user or an RPA to identify and mark each field/entity). Furthermore, the DOMs and/or document texts can be saved to separate files and presented to train a model (e.g., the model 185 of FIG. 1) as described with respect to block 370.

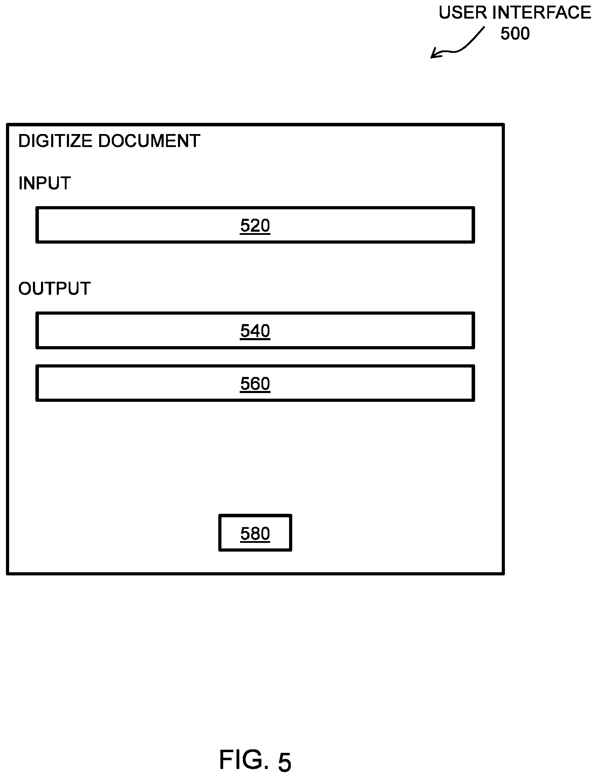

Turning now to FIG. 5, an example user interface 500 is shown according to one or more embodiments. The user interface 500 is an example of a digitize GUI to pass documents from any folder (e.g., the tagging folder) to an optical character recognition (OCR) or optical character reader of the recognition engine. Note that optical character recognition (OCR) or the optical character reader provide electronic conversion of the document (e.g., whether scanned, photographed, etc.) into the DOMs and/or document texts. The user interface 500 includes a digitize document menu where inputs and outputs can be selected. The input includes a menu option to select 520 a document path for the document to be digitized. The output includes a menu option to select 540 a document text (e.g., email text) and to select 560 a DOM (e.g., email DOM). An execute button 580 triggers the digitization.

At block 350, the recognition engine marks entities of interest. According to one or more embodiments, the recognition engine can receive markings of the entities of interest within the DOMs to obtain the tagged files (e.g., tagged JSON files). A marking can be an identification of a correctly defined entity. The markings can be provided by an RPA or a user input. With respect to a user input, a user interacting with a validation station can manually mark each field/entity of interest to obtain DOM and tagged files. That is, once digitized, documents (e.g., which can be in the hundreds or greater) can be loaded on the validation station with the relevant data and fields for the user to mark the data. Note that conventional pre-defined extractors are unable to perform the marking of block 350.

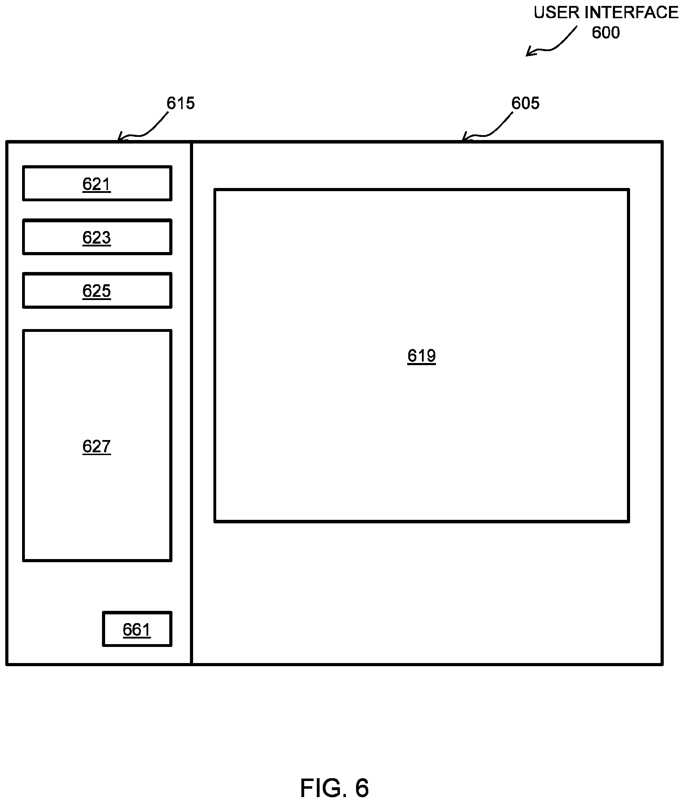

Turning to FIG. 6, an example user interface 600 is shown according to one or more embodiments. The user interface 600 includes a window 605 and a window 615. The user interface 600 is an example of selecting words 619 in the window 605 and adding the words to a relevant field in the window 615. For example, the relevant fields in the window 615 can include a document type field 621, an agency field 623, an agency phone number field 625, and an agency address field 627. In turn, if an address is selected from the words 619 of the window 605, that address can be populated into the agency address field 627. Once the tagging is complete, a save button 661 can trigger a save operation of both DOM and tagged data files to two different folders of a repository. Note that these folders can be used when training the model to identify the fields/entities at block 370.

At block 370, the recognition engine trains a model, such as by using as inputs the DOMS and tagged files. The model, as described herein, can implements a custom named entity recognition framework built on feature enhanced algorithm. In an example, the DOM and tagged files (e.g., obtained from the validation station) are feed by the recognition engine to the model via CRF algorithm for training. Further, features from the tagged words are extracted to train the model and can be later deployed into an AI center.

According to one or more embodiments respective to initialize model training, a minimum number of documents (e.g., selected from a range of 100 to 500 documents) are tagged. Further, the recognition engine can sort through the DOMs and tagged JSON files to separate the words into tagged words and other words in the document. Each tagged JSON file can then be loaded and bounding box coordinates of the data tagged saved. Then, the DOM file is loaded and the bounding box values, parts of speech data of each word, actual word and label is loaded to parent list. Once the similar data is loaded for all the files, feature engineering is implemented on the data. Next, to train the model, the recognition engine implements a pipeline of CRFs or other sequence labelling algorithm using a machine learning library with respect to the features.

Features can be extracted for each word and 'n' words coming before and after a word of interest, with 'n' being a configurable number. The recognition engine can look at 1, 2, or 3 words before and after the word of interest, depending on a significance of the words preceding and succeeding the work of interest. Note that the recognition engine implements a whole set of features for all the words mentioned in a text document to identify how the tagged data is defined, what words come before/after the word of interest, and how these words are defined in terms of features. Example of the features (e.g., the custom features) can include a generalized word class, a brief word class, a stemmer, a text case, a word type, a part of speech, an email, a signature, etc.

The generalized word class feature can mas any upper-case letter to "X", lower-case letter to "x", digits to "0" and other characters to "O" respectively. The brief word class feature can map consecutive uppercase-letter, lower-case letter, digits and other characters to "X", "x", "0", "O". For example, Digitalization1! Can have generalized word class of "Xxxxxxxxxxxxxx0O" and brief word class of "Xx0O".

The stemmer feature can include Lancaster and Porter Stemmers to extract a stemmed word of each word (e.g., a stemmed word of playing, player, and play play). The text case feature can include lower case, upper case, and title. The word type feature can include text, alphanumeric, and digits. The parts of speech feature can include noun, pronoun, verb, etc.

The email feature can include when a document is an email and is therefore split into parts/categories, such as email header, email body, and email signature. In turn, based on where a particular word occurs, that word would fall into one of these parts/categories. The model learns where the fields/entities of interest are usually specified and further learns to ignore areas (e.g., discards) locations that do not add value. The recognition engine can symbolically represent the data in a preprocess form to assist with extracting future data.

The signature feature can include when a document has combination of person names, date, organization names, etc., such that a pre-trained model of the recognition engine can identify signature and pass the signature on as a feature of the word to the model. Note that conventional pre-defined extractors are unable to utilizing such pre-trained models. Once passed, the model learns whether such words are of interest and, if so, then the model identifies how such words are usually spelt out based on other features and extract them.

At block 380, the recognition engine determines a plurality of target entities from one or more target documents. That is, in real-time operation or at runtime, fields from a target document can be predicted and extracted using ML/AI services and activities available in the recognition engine. In this way, the recognition engine overcome the challenges of the conventional pre-defined extractors.

According to one or more embodiment, once the model has been trained, the model is deployed on the AI Center of the recognition engine. Using ML/AI services and activities therein, the model can be loaded and used for field/entity predictions. Further, the recognition engine can provide confidence metrics (e.g., as percentages) for different categories/features/entities/field. Outputs (e.g., the plurality of target entities) by the recognition engine can be further processed if the corresponding confidence metrics are above a threshold (e.g., greater than 50%, 60%, 70%, etc.) and can be loaded into the validation station if below the threshold or on a range (e.g., 30% to 70%). An RPA and/or user can validate or correct the outputs and then forward the corrected output for further processing. Any validated output can be saved in separate directory/folder of the repository and used for retraining the model as a part of feedback loop to ensures that any similar target document is process with a higher degree of certainty (e.g., based on what the model has subsequently learned).

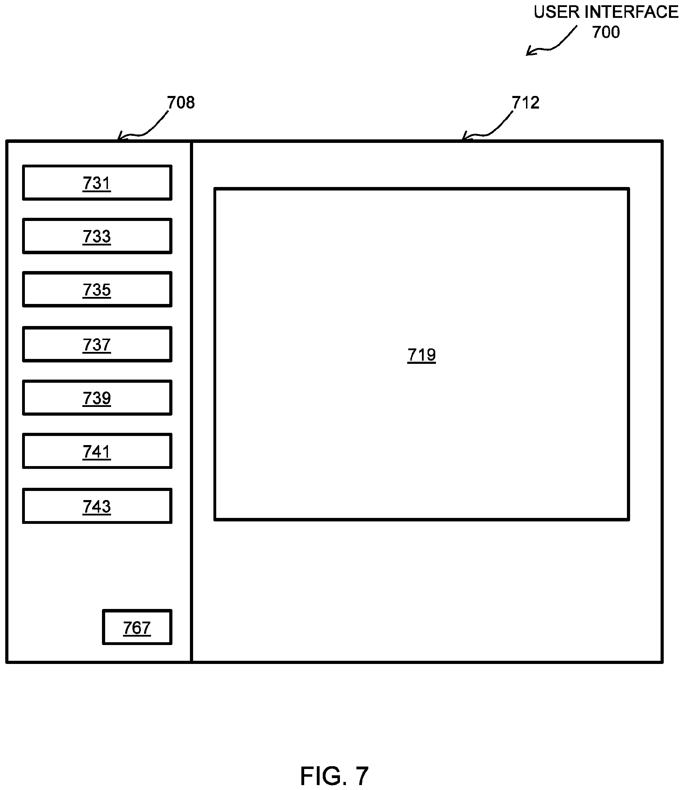

Turning to FIG. 7, an example user interface 700 is shown according to one or more embodiments. The user interface 700 is an example validation station that includes a window 708 and a window 712. The user interface 600 is further an example of selecting words 721 in the window 712 and viewing each word and a confidence metric in the window 708. Each entity 7.31, 733, 735, 737, 739, 741, and 743 has a percentage associated therewith to show the degree of confidence that the model predicted.

At block 390, the recognition engine contains misclassification or mis-splitting. Misclassification includes an instance of wrongly assigning an entity or field to a group or category. Mis-splitting includes an instance of wrongly dividing an email feature, a signature feature, or the like into parts.

According to one or more embodiments, misclassification can be controlled by assuming that confidence metrics during the training for correct predictions follow a Gaussian or a normal distribution. Further, confidence metrics can be recorded against each prediction. In turn, for each class and assuming Gaussian distribution, the recognition engine determines/calculates a minimum, a maximum, a mean, and a standard deviation of the distribution using the confidence metrics. In some cases, for a new prediction, confidence metrics can be obtained from the pre-trained model.

According to one or more embodiments, misclassification or mis-splitting can be determined by a cut-off value (e.g., a threshold as defined herein). The cut-off value can equal a ceiling (e.g., a mean or a standard deviation), where the ceiling is a rounding-up of the cut-off value to a nearest integer. If the confidence metric is less than the cut-off value, the model prediction can be discarded and an RPA or user can be prompted for review and validation.

Accordingly, the method 300 provides the technical effects, benefits, and advantages of being able to accommodate a generic pipeline of documents (e.g., the recognition engine does not need to be pretrained), can work with anything documentation (e.g., insurance documents with many fields) and can be delivered to user without coding, as well as can enhance present RPAs and provide new GUIs within an RPA architecture. Thus, when a user has a 100 to 500 document samples, the recognition engine can be tuned to work with such documents with efficiency.

The flowchart and block diagrams in the drawings illustrate the architecture, functionality, and operation of possible implementations of apparatuses, systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the flowchart and block diagrams in the drawings. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Although features and elements are described above in particular combinations, one of ordinary skill in the art will appreciate that each feature or element can be used alone or in any combination with the other features and elements. For instance, for any of the methods and processes described herein, the steps recited may be performed out of sequence in any order and sub-steps not explicitly described or shown may be performed. When using referring to "A or B", it may include A, B, or A and B, which may be extended similarly to longer lists. When using the notation X/Y it may include X or Y. Alternatively, when using the notation X/Y it may include X and Y. X/Y notation may be extended similarly to longer lists with the same explained logic. In addition, "coupled" or "operatively coupled" may mean that objects are linked but may have zero or more intermediate objects between the linked objects. Also, any combination of the disclosed features/elements may be used in one or more embodiments.

In addition, the methods and processes described herein may be implemented in a computer program, software, and/or firmware (e.g., a computer program product) incorporated in a computer-readable medium for execution by a computer or processor. That is, the computer program product may include a computer readable storage medium (or media) having computer readable program instructions thereon for causing a controller, processor, or the like to carry out aspects of the present invention.

The computer readable storage medium can be a tangible device that can retain and store computer readable program instructions. The computer readable storage medium may be, for example, but is not limited to, an electronic storage device, a magnetic storage device, an optical storage device, an electromagnetic storage device, a semiconductor storage device, or any suitable combination of the foregoing. The computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire. Examples of computer-readable storage media include, but are not limited to, a register, cache memory, semiconductor memory devices, magnetic media such as internal hard disks and removable disks, magneto-optical media, optical media such as compact disks (CD) and digital versatile disks (DVDs), a random access memory (RAM), a read-only memory (ROM), an erasable programmable read-only memory (EPROM or Flash memory), a static random access memory (SRAM), and a memory stick.

The computer readable program instructions described herein can be communicated and/or downloaded to respective controllers, processors, or the like from an apparatus, device, computer, or external storage via a connection, for example, network communications. Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used herein, specify the presence of stated features, integers, steps, operations, elements, and/or components, but do not preclude the presence or addition of one more other features, integers, steps, operations, element components, and/or groups thereof.

The descriptions of the various embodiments herein have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A system comprising:
a memory configured to store processor executable instructions for a recognition engine; and
at least one processor coupled to the memory and configured to execute the processor executable to cause the system to:
define, by the recognition engine, a plurality of baseline entities to be identified from one or more documents in a workflow;
digitize, by the recognition engine, the one or more documents to generate one or more corresponding document object models;
train, by the recognition engine, a model by using as inputs the one or more corresponding document object models and tagged files; and
determine, by the recognition engine using the model, a plurality of target entities from one or more target documents.

2. The system of claim 1, wherein one or more robotic process automations of the recognition engine define the plurality of baseline entities, digitize the one or more documents, train the model, or determine the plurality of target entities.

3. The system of claim 1, wherein the processor executable further causes the system to:
receive markings of entities of interest within the one or more corresponding document object models to obtain the tagged files.

4. The system of claim 3, wherein the markings are provided by a robotic process automation or user input.

5. The system of claim 1, wherein the model implements a custom named entity recognition framework built on feature enhanced algorithm.

6. The system of claim 1, wherein the recognition engine determines the plurality of target entities by extracting or predicting the plurality of target entities from one or more target documents.

7. The system of claim 6, wherein a confidence metric is generated for extracted or predicted entities to trigger review or validation.

8. The system of claim 1, wherein a feature enhanced algorithm or robotic process automation of the recognition implements the training of the model.

9. The system of claim 1, wherein the plurality of target entities are provided for further training of the model in a feedback loop of the recognition engine.

10. The system of claim 1, wherein the digitization of the one or more documents includes identifying at least line numbers, font sizes, and language for the entities of the one or more documents.

11. A method comprising:
defining, by the recognition engine stored on a memory as processor executable instructions being executed by at least one processor, a plurality of baseline entities to be identified from one or more documents in a workflow;
digitizing, by the recognition engine, the one or more documents to generate one or more corresponding document object models;
training, by the recognition engine, a model by using as inputs the one or more corresponding document object models and tagged files; and
determining, by the recognition engine using the model, a plurality of target entities from one or more target documents.

12. The method of claim 11, wherein one or more robotic process automations of the recognition engine define the plurality of baseline entities, digitize the one or more documents, train the model, or determine the plurality of target entities.

13. The method of claim 11, wherein the method further comprises:
receiving markings of entities of interest within the one or more corresponding document object models to obtain the tagged files.

14. The method of claim 13, wherein the markings are provided by a robotic process automation or user input.

15. The method of claim 11, wherein the model implements a custom named entity recognition framework built on feature enhanced algorithm.

16. The method of claim 11, wherein the recognition engine determines the plurality of target entities by extracting or predicting the plurality of target entities from one or more target documents.

17. The method of claim 16, wherein a confidence metric is generated for extracted or predicted entities to trigger review or validation.

18. The method of claim 11, wherein a feature enhanced algorithm or robotic process automation of the recognition implements the training of the model.

19. The method of claim 11, wherein the plurality of target entities are provided for further training of the model in a feedback loop of the recognition engine.

20. The method of claim 11, wherein the digitization of the one or more documents includes identifying at least line numbers, font sizes, and language for the entities of the one or more documents.
